# EUROPEAN PATENT APPLICATION

(11) **EP 4 678 592 A1**
(43) Date of publication of application: **14.01.2026**
(21) Application number: 24769745.1
(22) Date of filing: 27.02.2024
(51) Int. Cl.: B67C 3/30, A23D 7/06, A23D 9/02, B65B 31/00

(54) **METHOD FOR IMPROVING OXIDATION STABILITY OF POLYUNSATURATED FATTY ACID GREASE CONTAINING MULTIPLE DOUBLE BONDS**

(30) Priority: 10.03.2023 CN 202310253304
(71) Applicant: Zhejiang Keming Biopharmaceutical Co., Ltd, Xinchang, Zhejiang 312500 (CN)
(72) Inventor: XU, Xinde, Shaoxing, Zhejiang 312500 (CN); WANG, Ting, Shaoxing, Zhejiang 312500 (CN); WANG, Shengfan, Shaoxing, Zhejiang 312500 (CN); WANG, Xiaoping, Shaoxing, Zhejiang 312500 (CN); BAI, Yalong, Shaoxing, Zhejiang 312500 (CN)
(74) Representative: Cattaneo, Elisabetta
(86) International application number: PCT/CN2024/078867
(87) International publication number: WO 2024/188051

(57) **Abstract**

A method for improving the oxidation stability of a polyunsaturated fatty acid grease containing multiple double bonds. The method comprises: controlling the oxygen residue content in a storage environment of a polyunsaturated fatty acid grease containing multiple double bonds to be less than 1.00 %. More specifically, a package container is subjected to vacuumizing, nitrogen charging, vacuumizing, nitrogen charging, and vacuumizing and nitrogen charging, namely, the package container is subjected to three instances of vacuumizing and nitrogen charging before filling is carried out on same; the storage chamber is then subjected to filling; then same is subjected to vacuumizing, nitrogen charging, vacuumizing, nitrogen charging, and vacuumizing and nitrogen charging, namely, the vacuumizing and nitrogen charging are repeated three instances after the filling is finished; and finally the package container is packaged. As such, the oxygen residue content in the storage environment of the polyunsaturated fatty acid grease containing multiple double bonds is ensured to be less than 1.00 %, and the peroxide value of the grease does not rise after the grease is stored for six months.

## Description

### FIELD OF THE INVENTION

The present invention relates to a method for improving oxidation stability of polyunsaturated fatty acid grease containing multiple double bonds, and belongs to the field of grease processing technology.

### BACKGROUND OF THE INVENTION

As people are increasingly concerned about their own health, the public is starting to take more nutritious and healthy dietary supplements. Polyunsaturated fatty acid (PUFA) products play an important role on them. Polyunsaturated fatty acid is referred to as fatty acids containing at least two double bonds in the molecular structural formula. The existing forms include fatty acid ethyl ester, fatty acid methyl ester, fatty acid glyceride, and free fatty acid, etc.

Polyunsaturated fatty acid (PUFA) is important material foundations in the body's metabolism, especially in activities such as infant brain development, and is a component of cell membrane. Polyunsaturated fatty acid (PUFA) mainly plays physiological functions on maintaining cell membrane fluidity, promoting cholesterol esterification, reducing cholesterol and triglycerides, reducing blood viscosity, and improving blood circulation. At the same time polyunsaturated fatty acid (PUFA) also has the functions of improving human thinking and enhancing memory. However, the human body can not synthesize polyunsaturated fatty acid (PUFA) by itself, and polyunsaturated fatty acid (PUFA) must be obtained through diet, etc.

There are various types of polyunsaturated fatty acid (PUFA), mainly including ω-3 polyunsaturated fatty acid (PUFA) (ω-3 PUFA), ω-6 polyunsaturated fatty acid (PUFA) (ω-6 PUFA), ω-9 polyunsaturated fatty acid (PUFA) (ω-9 PUFA) and other forms, in particular, including α-linolenic acid (ALA), eicosapentaenoic acid (EPA), docosahexaenoic acid (DHA), docosapentaenoic acid (DPA), linoleic acid (LA), conjugated linoleic acid (CLA), γ-linolenic acid (GLA), arachidonic acid (AA), etc.. Among them, the ω-3 polyunsaturated fatty acid (ω-3 PUFA) represented by eicosapentaenoic acid (EPA) and docosahexaenoic acid (DHA) are the most well-known and accepted by the public, and have the most obvious improvement and promotion effects on human and animal health. The molecular structure formula of some polyunsaturated fatty acid is as follows:

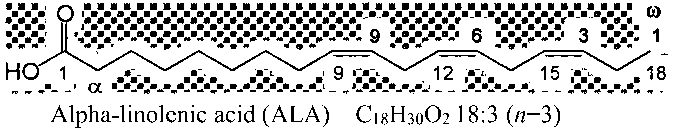

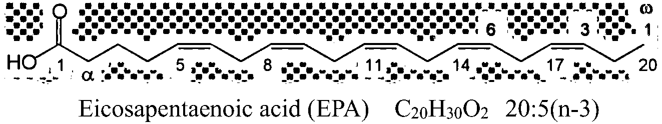

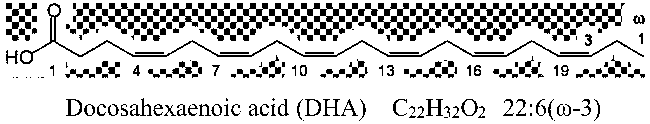

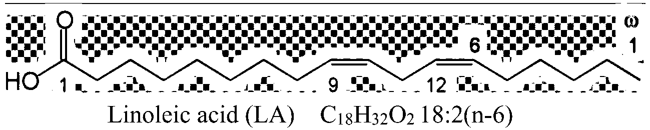

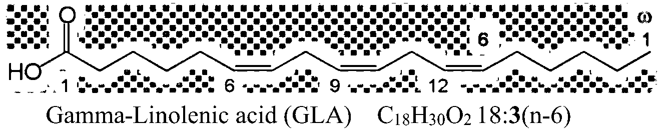

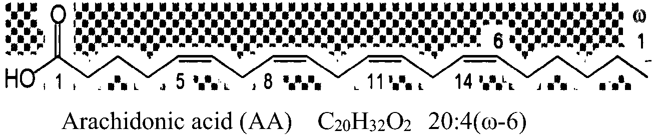

Polyunsaturated fatty acid is mainly derived from algae extract and aquatic animal oil, wherein one of the important sources is fish oil. Due to the presence of at least two double bonds in the fatty acids of polyunsaturated fatty acid grease, these unsaturated double bonds are highly sensitive to oxygen during processing and storage, and are easily oxidized to form peroxides. It leads to oxidative rancidity and results in a decrease in product quality.

The peroxide value is an important indicator parameter for the quality of grease. The peroxide value (POV) refers to the millimoles of hydrogen peroxide contained in 1kg of grease, and may be used to indicate the content of hydrogen peroxide in the grease, indicating the degree of oxidation of grease and fatty acids, and can be used to indicate whether the sample has deteriorated due to oxidation. Foods made from grease and fats are usually judged for their quality and degree of spoilage by measuring their peroxide value. The higher the peroxide value, the more severe the oxidation of the grease and the poorer its quality, which may even contain harmful peroxides. So the lower the peroxide value in grease, the better. Generally, it is required that the peroxide value of polyunsaturated fatty acid grease is less than 5 meq/kg.

The ease of oxidation of grease is closely related to the number of double bonds in the molecular structure of fatty acids and the oxygen content in the environment. Whether grease is easily oxidized is closely related to the number of double bonds in the molecular structure of fatty acids and the oxygen content in the storage environment. The more double bonds in fatty acids, the higher the oxygen content in the storage environment, and the easier it is to oxidize. For polyunsaturated fatty acids with more double bonds (generally refers to polyunsaturated fatty acids with three or more double bonds in the molecular structure of fatty acids), its peroxide value is also prone to increase at lower oxygen content.

Therefore, deoxygenation is a necessary and effective method to prevent the deterioration of grease and the increase of peroxide value. The common method is to replace oxygen with nitrogen, that is, filling an appropriate amount of nitrogen into a grease package container under closed conditions replaces the air through nitrogen filling technology, to keep grease in a low oxygen or anaerobic state for a long time, thereby to achieve the purpose of inhibiting grease oxidation. However, in practical operation, even when nitrogen sealing treatment is used, or oxygen is not easily replaced completely, or a large amount of oxygen may have already dissolved in the grease, it often leads to insufficient oxidation stability of the grease. When the grease is stored for a long time, some double bonds are still oxidized, and the peroxide value of the grease increases. This is particularly evident in polyunsaturated fatty acid grease containing multiple double bonds, as a small amount of residual oxygen can cause peroxidation of the grease containing multiple double bonds.

In previous technologies, there have been numerous studies on improving the oxidation stability of polyunsaturated fatty acids during storage through process or equipment innovation.

CN106697381A discloses a nitrogen filling packaging method, which mainly includes steps such as vacuum pumping, nitrogen filling, rapid sealing, and cooling. In the vacuum pumping step, the vacuum degree and nitrogen filling amount vary with the mass of the packaging content. This method is suitable for small packaged foods with low content quality, such as chicken legs, ham, sausages, grilled fish slices, beef balls, etc., but there is no control over the oxygen residue content in the final packaging environment.

CN203152398U describes a set of grease gas controlled nitrogen storage device, which adjusts the nitrogen content in the tank through a liquid sealing device, so that the nitrogen in the tank is always in a balanced state, effectively suppressing grease oxidation. The utility model patent is used for a complex device for controlling nitrogen atmosphere, and is suitable for large grease storage tanks, and is not applicable to commercial packaging grease circulating in the market. Moreover, it does not control the oxygen residue content in the packaging environment.

CN115191493A discloses a processing method and application for improving the stability of grease products, which includes steps such as ultrasonic deoxygenation, oxygen replacement, ultra-high pressure uniformity, and nitrogen filling. The dissolved oxygen in the grease is first removed, and then nitrogen replacement is used to reduce the oxygen content in the packaging environment. This process is very complex and requires high equipment requirements. Moreover, the ultrasonic process itself also promotes the oxidation of unsaturated double bonds.

CN115109651A discloses a compound antioxidant and antioxidant method for edible fish oil. Natural vitamin E, tea polyphenol palmitate, and citric acid are used as composite antioxidants, supplemented with nitrogen filling measures to enhance the oxidative stability of fish oil. In this method, multiple relatively expensive antioxidants are used, and the mixing process is also complex in order to fully disperse the antioxidants into the grease.

In summary, there are several shortcomings in the previous technology for improving the oxidation stability of grease: the equipment structure is complex and only suitable for fixed large storage tanks, but not suitable for commercial packaging products; or requiring a large amount of expensive antioxidants; or incomplete deoxygenation during the nitrogen filling process may result in poor oxidation stability during the storage of polyunsaturated fatty acids containing multiple double bonds. Moreover, in previous technologies, the oxygen residue content in the storage environment is not quantitatively controlled to a certain level, which reduced the antioxidant effect of grease during storage and led to a rapid increase in its peroxide value.

### SUMMARY OF THE INVENTION

In view of previous technical defects, it is necessary to find a method that can enhance the oxidative stability of grease, especially polyunsaturated fatty acid grease containing multiple double bonds during storage, in order to maintain the quality of the grease. The present invention provides a method for controlling the oxygen residue content in the storage environment, so as to improve the oxidation stability of the polyunsaturated fatty acid, especially polyunsaturated fatty acid grease containing multiple double bonds. In particular, the package container is subjected to vacuumizing, nitrogen charging, vacuumizing, nitrogen charging, vacuumizing and nitrogen charging before filling grease, it repeats three instances in total; then the package container is subjected to vacuumizing, nitrogen charging, vacuumizing, nitrogen charging, vacuumizing and nitrogen charging after finishing filling grease, it repeats three instances in total, so that controlling the oxygen residue content in the storage environment of the grease is less than 1.00 %. This ensures that the grease comes into contact with as little oxygen as possible during the filling process, and the dissolved oxygen in the grease is removed as much as possible during filling. During the storage process after filling, the grease is also in a low oxygen or anaerobic environment.

The method for improving the oxidation stability of a polyunsaturated fatty acid grease containing multiple double bonds of the present invention comprises the following steps:
a) a package container is subjected to vacuumizing, nitrogen charging, vacuumizing, nitrogen charging, vacuumizing and nitrogen charging;
b) filling the package container with polyunsaturated fatty acid grease in step a);
c) vacuumizing, nitrogen charging, vacuumizing, nitrogen charging, vacuumizing and nitrogen charging after finishing the filling, so as to make the oxygen residue content in a storage environment of the polyunsaturated fatty acid grease to be less than 1.00 %; and
d) sealing the package container to complete the filling.

In the preferred technical solution of the method of the present invention, preferably, the polyunsaturated fatty acid grease containing multiple double bonds is selected from the group consisting of fish oil, algal oil, linoleic acid, conjugated linoleic acid, linolenic acid and arachidonic acid. Preferably, the polyunsaturated fatty acid containing multiple double bonds may exist in the form of methyl ester, ethyl ester, glycerol ester, or free fatty acids.

In the preferred technical solution of the method of the present invention, preferably, the package container may be iron drums, steel drums, plastic drums, or aluminum drums.

In the preferred technical solution of the method of the present invention, preferably, the vacuum degree is between -0.02 MPa and -0.09 MPa when vacuumizing. If taking into account the vacuum effect and packaging drum strength, preferably, the vacuum degree is between -0.04 MPa and -0.05 MPa.

In the preferred technical solution of the method of the present invention, preferably, the pressure is between 0.01 MPa and 0.07 MPa when nitrogen charging. If taking into account the nitrogen filling effect and packaging drum strength, preferably, the pressure after nitrogen charging is between 0.01 MPa and 0.03 MPa.

Both of the vacuum degree and the nitrogen pressure of the present invention are gauge pressures.

In the method of the present invention, the package container is subjected to vacuumizing, nitrogen charging before filling, and the vacuumizing and nitrogen charging are repeated three instances so as to remove oxygen from the container as much as possible. It is very important to reduce the oxidation of polyunsaturated fatty acid grease during the filling process, because a large amount of grease is easily atomized into oil droplets during high-speed filling. These oil droplets have a large surface area. If the oxygen content in the environment inside the container is high, double bonds are easily oxidized into peroxides. It leads to an increase in peroxide value and makes quality of grease deteriorated during the process. On the contrary, if the oxygen in the container is fully replaced with nitrogen before the grease is put into the container, to ensure that the environment is in an oxygen free or low oxygen state. Even if a large amount of grease is atomized during the filling grease process, the double bonds in it will not be oxidized.

After finishing the filling, it continues to repeat vacuumizing and nitrogen charging for two purposes. On the one hand, although the residual oxygen in the container is relatively low after vacuumizing and nitrogen charging operations for three instances before filling, the gas phase space of the container is greatly compressed after finishing filling grease, and the oxygen residue content in the gas phase space at the top of the grease in the container will also be at a high level. This oxygen needs to be removed by replacement of vacuumizing and nitrogen charging. On the other hand, due to the small amount of dissolved oxygen contained in the grease itself, vacuumizing operation can remove the dissolved oxygen in the grease as much as possible. In this way, repeatedly vacuumizing and nitrogen charging operations after filling can ensure that the grease storage environment is in an anaerobic or low oxygen state, so that oxidation will not occur due to the presence of oxygen during long-term storage, and the oxidation stability is greatly enhanced.

The reason why the operations of vacuumizing and nitrogen charging are repeated three instances before and after filling is mainly because the inventors have conducted multiple experimental studies to investigate the oxidation stability of grease in different oxygen content environments. It was found that when the oxygen residue content in the environment is less than 1.00 %, even if polyunsaturated fatty acid greases containing multiple double bonds have a slow increase in peroxide value. In other words, when the oxygen residue content in the environment is less than 1.00 %, it can significantly improve the oxidation stability of polyunsaturated fatty acid grease containing multiple double bonds. To ensure that the oxygen residue content in the container environment is less than 1.00 %, it is necessary to have a vacuumizing and nitrogen charging operation for three instances. The oxygen content of the present invention is mainly measured by using the OxySense 325i headspace residual oxygen /dissolved oxygen analyzer.

The present invention can significantly improve the oxidative stability of grease stored in an environment with an oxygen residue content of less than 1.00 %, especially the improvement of oxidative stability of polyunsaturated fatty acids with more double bonds is particularly significant. In particular, before filling, remove oxygen from the container by vacuumizing and nitrogen charging, vacuumizing and nitrogen charging, vacuumizing and nitrogen charging, so as to reduce oxidation during the grease filling process . After finishing the filling, remove residual oxygen at the top of the container and a small amount of dissolved oxygen in the grease by vacuumizing and nitrogen charging, vacuumizing and nitrogen charging, vacuumizing and nitrogen charging. This can ensure that the residual oxygen content in the grease storage environment is less than 1.00 %, and ensure that the peroxide value of the oil will not increase during storage and ensure oxidation stability. The process of the present invention improves the oxidation stability of polyunsaturated fatty acid grease, especially the polyunsaturated fatty acid grease containing multiple double bonds during storage. It is suitable for filling operations of one or more polyunsaturated fatty acid mixtures including fish oil (directly extracted omega-3 polyunsaturated fatty acids), algal oil (fermented source omega-3 polyunsaturated fatty acids), linoleic acid, conjugated linoleic acid, linolenic acid, arachidonic acid, etc.

### DETAILED DESCRIPTION OF THE PRESENT INVENTION AND PREFERRED EMBODIMENTS THEREOF

Hereafter, the present invention will be described specifically with reference to examples. The examples are given only for illustration of the technical solution of the present invention and should not be construed to limit the present invention.

### Example 1

Take a 200 L steel drum, vacuumizing to -0.04 MPa, nitrogen charging to 0.03 MPa, then vacuumizing to -0.04 MPa, nitrogen charging to 0.03 MPa, and then vacuumizing again to -0.04 MPa, nitrogen charging to 0.03 MPa. Afterwards use an OxySense 325i headspace residual oxygen/dissolved oxygen analyzer to determine that the oxygen residue content in the steel drum is 2.52 %.

Inject ethyl ester type polyunsaturated fatty acid fish oil raw material (EPA 82.4 %, DHA 0.07 %, a total content of polyunsaturated fatty acid is 86.5 %, a peroxide value 1.34 meq/kg) into the steel drum after nitrogen replacement, then vacuumizing to -0.09 MPa, nitrogen charging to 0.07 MPa, then vacuumizing again to -0.09 MPa, nitrogen charging to 0.07 MPa, and then vacuumizing again to -0.09 MPa, and nitrogen charging to 0.07 MPa. The oxygen residue content at the top of the steel drum is measured to be 0.23 %. Sampling and testing the peroxide value (0 days), and then sealing the steel drum to complete the filling.

Samples are respectively taken at 6 days, 30 days, 60 days, 90 days and 180 days after storage so as to test the peroxide value of fish oil. The test results are shown in Table 1.

### Comparative Example 2

Take a 200 L steel drum, vacuumizing to -0.04 MPa, nitrogen charging to 0.03 MPa. Afterwards use an OxySense 325i headspace residual oxygen/dissolved oxygen analyzer to determine that the oxygen residue content in the steel drum is 12.48 %.

Inject ethyl ester type polyunsaturated fatty acid fish oil raw material (EPA 82.4 %, DHA 0.07 %, a total content of polyunsaturated fatty acid is 86.5 %, a peroxide value 1.34 meq/kg) into the steel drum after nitrogen replacement, then vacuumizing to -0.09 MPa, nitrogen charging to 0.07 MPa. The oxygen residue content at the top of the steel drum is measured to be 2.15 %. Sampling and testing peroxide value (0 days), and then sealing the steel drum to complete the filling.

Samples are respectively taken at 6 days, 30 days, 60 days, 90 days and 180 days after storage so as to test the peroxide value of fish oil. The test results are shown in Table 1.

### Comparative Example 3

Take a 200 L steel drum, directly nitrogen charging the bottom of the steel drum for 3 minutes until nitrogen emerges. Afterwards use an OxySense 325i headspace residual oxygen/dissolved oxygen analyzer to determine that the oxygen residue content in the steel drum is 15.21 %.

Inject ethyl ester type polyunsaturated fatty acid fish oil raw material (EPA 82.4 %, DHA 0.07 %, a total content of polyunsaturated fatty acid is 86.5 %, a peroxide value 1.34 meq/kg) into the steel drum after nitrogen replacement, then nitrogen charging to the top of the steel drum for 2 minutes. The oxygen residue content at the top of the steel drum is measured to be 3.58 %. Sampling and testing peroxide value (0 days), and then sealing the steel drum to complete the filling.

Samples are respectively taken at 6 days, 30 days, 60 days, 90 days and 180 days after storage so as to test the peroxide value of fish oil. The test results are shown in Table 1.

It may be seen from the examples that the process of three instances repeated vacuumizing and nitrogen charging before filling as well as three instances repeated vacuumizing and nitrogen charging after filling can ensure that polyunsaturated fatty acid grease are not oxidized during the filling process. After finishing the filling, the oxygen residue content at the top of the steel drum is less than 1.00 %. The peroxide value of polyunsaturated fatty acid grease will not significantly be increased during long-term storage, and the quality of the fish oil remains stable.

### Example 4

Take a 25 L plastic drum, vacuumizing to -0.02 MPa, nitrogen charging to 0.01 MPa, then vacuumizing to -0.02 MPa, nitrogen charging to 0.01 MPa, and then vacuumizing again to -0.02 MPa, nitrogen charging to 0.01 MPa. Afterwards use an OxySense 325i headspace residual oxygen/dissolved oxygen analyzer to determine that the oxygen residue content in the plastic drum is 3.14 %.

Inject triglyceride type polyunsaturated fatty acid algal oil raw material obtained by fermentation method (EPA 3.7 %, DHA 21.6 %, a total content of polyunsaturated fatty acid is 28.5 %, a peroxide value 2.65 meq/kg) into the plastic drum after nitrogen replacement, then vacuumizing to -0.02 MPa, nitrogen charging to 0.01 MPa, then vacuumizing to -0.02 MPa, nitrogen charging to 0.01 MPa, and then vacuumizing again to -0.02 MPa, and nitrogen charging to 0.01 MPa. The oxygen residue content at the top of the plastic drum is measured to be 0.96 %. Sampling and testing a peroxide value (0 days), and then sealing the plastic drum to complete the filling.

Samples are respectively taken at 6 days, 30 days, 60 days, 90 days and 180 days after storage so as to test the peroxide value of algal oil. The test results are shown in Table 1.

### Example 5

Take a 5 L iron drum, vacuumizing to -0.05 MPa, nitrogen charging to 0.01 MPa, then vacuumizing to -0.05 MPa, nitrogen charging to 0.01 MPa, and then vacuumizing again to -0.05 MPa, nitrogen charging to 0.01 MPa. Afterwards use an OxySense 325i headspace residual oxygen/dissolved oxygen analyzer to determine that the oxygen residue content in the iron drum is 2.87 %.

Inject free type conjugated linoleic acid raw material (content 78.5 %, a peroxide value 1.89 meq/kg) into the iron drum after nitrogen replacement, then vacuumizing to -0.05 MPa, nitrogen charging to 0.01 MPa, then vacuumizing to -0.05 MPa, nitrogen charging to 0.01 MPa, and then vacuumizing again to -0.05 MPa, and nitrogen charging to 0.01 MPa. The oxygen residue content at the top of the iron drum is measured to be 0.75 %. Sampling and testing the peroxide value (0 days), and then sealing the plastic drum to complete the filling.

Samples are respectively taken at 6 days, 30 days, 60 days, 90 days and 180 days after storage so as to test the peroxide value of oil. The test results are shown in Table 1.

### Example 6

Take a 1 L aluminum drum, vacuumizing to -0.05 MPa, nitrogen charging to 0.04 MPa, then vacuumizing to -0.05 MPa, nitrogen charging to 0.04 MPa, and then vacuumizing again to -0.05 MPa, nitrogen charging to 0.04 MPa. Afterwards use an OxySense 325i headspace residual oxygen/dissolved oxygen analyzer to determine that the oxygen residue content in the aluminum drum is 1.17 %.

Inject methyl ester type arachidonic acid raw material (content 64.1 %, peroxide value 1.22 meq/kg) into the aluminum drums after nitrogen replacement, then vacuumizing to -0.05 MPa, nitrogen charging to 0.04 MPa, then vacuumizing again to -0.05 MPa, nitrogen charging to 0.04 MPa, and then vacuumizing again to -0.05 MPa, and nitrogen charging to 0.04 MPa. The oxygen residue content at the top of the aluminum drums is measured to be 0.43 %. Sampling and testing the peroxide value (0 days), and then sealing the plastic drum to complete the filling.

Samples are respectively taken at 6 days, 30 days, 60 days, 90 days and 180 days after storage so as to test the peroxide value of grease. The test results are shown in Table 1.

### Example 7

Take a 200 L steel drum, vacuumizing to -0.05 MPa, nitrogen charging to 0.04 MPa, then vacuumizing to -0.05 MPa, nitrogen charging to 0.04 MPa, and then vacuumizing again to -0.05 MPa, nitrogen charging to 0.04 MPa. Afterwards use an OxySense 325i headspace residual oxygen/dissolved oxygen analyzer to determine that the oxygen residue content in the steel drum is 2.57 %.

Inject triglyceride type linolenic acid and linoleic acid mixture raw material (linolenic acid content is 12.2 %, inoleic acid content is 33.9 %, a peroxide value is 1.65 meq/kg) into the steel drum after nitrogen replacement, then vacuumizing to -0.05 MPa, nitrogen charging to 0.04 MPa, then vacuumizing to -0.05 MPa, nitrogen charging to 0.04 MPa, and then vacuumizing again to -0.05 MPa, and nitrogen charging to 0.04 MPa. The oxygen residue content at the top of the steel drum is measured to be 0.64 %. Sampling and testing peroxide value (0 days), and then sealing the plastic drum to complete the filling.

Samples are respectively taken at 6 days, 30 days, 60 days, 90 days and 180 days after storage so as to test the peroxide value of grease. The test results are shown in Table 1.

### Example 8

Take a 200 L steel drum, vacuumizing to -0.09 MPa, nitrogen charging to 0.07 MPa, then vacuumizing to -0.09 MPa, nitrogen charging to 0.07 MPa, and then vacuumizing again to -0.09 MPa, nitrogen charging to 0.07 MPa. Afterwards use an OxySense 325i headspace residual oxygen/dissolved oxygen analyzer to determine that the oxygen residue content in the steel drum is 1.72 %.

Inject ethyl ester type polyunsaturated fatty acid fish oil raw material (EPA 82.4 %, DHA 0.07 %, a total content of polyunsaturated fatty acid is 86.5 %, a peroxide value 1.34 meq/kg) into the steel drum after nitrogen replacement, then vacuumizing to -0.04 MPa, nitrogen charging to 0.03 MPa, then vacuumizing to -0.04 MPa, nitrogen charging to 0.03 MPa, and then vacuumizing again to -0.04 MPa, and nitrogen charging to 0.03 MPa. The oxygen residue content at the top of the steel drum is measured to be 0.19 %. Sampling and testing peroxide value (0 days), and then sealing the plastic drum to complete the filling.

Samples are respectively taken at 6 days, 30 days, 60 days, 90 days and 180 days after storage so as to test the peroxide value of oil. The test results are shown in Table 1.

**Table 1: Changes of Peroxide Value During Sample Storaged in the Example**

| Example | The oxygen residue content at the top of the package container after filling | Peroxide Value (meq/kg) | | | | | | |
|---|---|---|---|---|---|---|---|---|
| | | Before filling | 0 days | 6 days | 30 days | 60 days | 90 days | 180 days |
| Example 1 | 0.23 % | 1.34 | 1.34 | 1.29 | 1.35 | 1.41 | 1.34 | 1.36 |
| Comparative Example 2 | 2.15 % | 1.34 | 2.72 | 2.97 | 3.49 | 3.98 | 4.79 | 5.64 |
| Comparative Example 3 | 3.58 % | 1.34 | 3.12 | 3.98 | 4.46 | 4.98 | 5.57 | 6.36 |
| Example 4 | 0.96 % | 2.65 | 2.66 | 2.78 | 2.69 | 2.73 | 2.75 | 2.72 |
| Example 5 | 0.75 % | 1.89 | 1.92 | 1.99 | 1.98 | 2.02 | 1.96 | 1.99 |
| Example 6 | 0.43 % | 1.22 | 1.24 | 1.28 | 1.33 | 1.32 | 1.42 | 1.39 |
| Example 7 | 0.64 % | 1.65 | 1.66 | 1.71 | 1.69 | 1.72 | 1.78 | 1.77 |
| Example 8 | 0.19 % | 1.25 | 1.27 | 1.30 | 1.38 | 1.42 | 1.39 | 1.45 |

The above examples are only preferred examples of the present invention and has industrial applicability. It should be pointed out that it cannot be determined that the specific examples of the present invention are limited to this,. Persons skilled in the art can make several simple deductions or substitutions without departing from the scope of protection of the present invention, which should also be regarded as the scope of protection of the present invention.

## Claims

1. A method for improving the oxidation stability of a polyunsaturated fatty acid grease containing multiple double bonds, comprising the following steps:
a) a package container is subjected to vacuumizing, nitrogen charging, vacuumizing, nitrogen charging, vacuumizing and nitrogen charging;
b) filling the package container with polyunsaturated fatty acid grease in step a);
c) vacuumizing, nitrogen charging, vacuumizing, nitrogen charging, vacuumizing and nitrogen charging after finishing the filling, so as to make an oxygen residue content in a storage environment of the polyunsaturated fatty acid grease to be less than 1.00 %; and
d) sealing the package container to complete the filling.

2. The method of claim 1, wherein the polyunsaturated fatty acid grease containing multiple double bonds is selected from the group consisting of fish oil, algal oil, linoleic acid, conjugated linoleic acid, linolenic acid and arachidonic acid.

3. The method of claim 1, wherein the polyunsaturated fatty acid containing multiple double bonds exist in the form of methyl esters, ethyl esters, glycerol esters, or free fatty acids.

4. The method of claim 1, wherein the package container is iron drums, steel drums, plastic drums, or aluminum drums.

5. The method of claim 1, wherein a vacuum degree for vacuumizing is between -0.02 MPa and -0.09 MPa.

6. The method of claim 5, wherein the vacuum degree for vacuumizing is between -0.04 MPa and -0.05 MPa.

7. The method of claim 1, wherein a pressure for nitrogen charging is between 0.01 MPa and 0.07 MPa.

8. The method of claim 7, wherein the pressure for nitrogen charging is between 0.01 MPa and 0.03 MPa.
